# EUROPÄISCHE PATENTSCHRIFT

(11) **EP 1 355 774 B1**
(45) Veröffentlichungstag und Bekanntmachung des Hinweises auf die Patenterteilung: **13.04.2005**
(21) Anmeldenummer: 02710787.9
(22) Anmeldetag: 10.01.2002
(51) Int. Cl.: B29B 17/02, B03B 5/44

(54) **TRENNVERFAHREN FÜR TEPPICHBÖDEN**
SEPARATING SYSTEM FOR CARPETED FLOOR
PROCEDE DE SEPARATION POUR MOQUETTE

(30) Priorität: 19.01.2001 DE 10102399
(43) Veröffentlichungstag der Anmeldung: 29.10.2003
(73) Patentinhaber: Zimmer AG, 60388 Frankfurt (DE)
(72) Erfinder: DONAJ, Roland, 35444 Biebertal (DE); DILLY-LOUIS, Wolfgang, 61169 Friedberg (DE); KÄMPF, Rudolf, 63584 Gründau (DE); SCHNITTKER, Norman, 29614 Soltau (DE); WOLF, Reinhard, 63517 Rodenbach (DE)
(74) Vertreter: Meyer-Dulheuer, Karl-Hermann, Dr.
(86) Internationale Anmeldenummer: PCT/EP2002/000159
(87) Internationale Veröffentlichungsnummer: WO 2002/057060

(56) Entgegenhaltungen:
- US-A- 4 167 477
- US-A- 5 598 980
- US-A- 5 653 867
- US-A- 5 722 603
- WUSTENBERG D ET AL: "MATERIAL RECYCLING OF TEXTILE FLOOR COVERINGS" INTERNATIONAL POLYMER SCIENCE AND TECHNOLOGY, RAPRA TECHNOLOGIES, SHROPSHIRE, GB, Bd. 21, Nr. 3, 1994, Seiten T-1-T-9, XP000453788 ISSN: 0307-174X

## Beschreibung

Die Erfindung betrifft ein Verfahren zum Abtrennen von Polymerfasermaterial aus zerkleinerten Teppichbodenstücken, welche man zusammen mit einer Trennsalz enthaltenden wässrigen Lösungen einem ersten Rührbehälter zuführt und aus dem ersten Rührbehälter eine erste Suspension abzieht, welche man einer ersten mechanischen Trennstufe zuführt, aus welcher man eine erste feststoffreiche Phase, eine zweite feststoffreiche Phase, die Polymerfasermaterial enthält, und eine Flüssigphase abtrennt, wobei man die zweite feststoffreiche Phase mit einer wasserhaltigen Trennlösung in einem zweiten Rührbehälter mischt und aus dem zweiten Rührbehälter eine zweite Suspension abzieht, welche man einer zweiten mechanischen Trennstufe zuführt, aus welcher man eine dritte feststoffreiche Phase, eine an Polymerfasermaterial reiche Phase und eine Flüssigphase abtrennt.

Ein solches Verfahren ist aus EP 0681 896 B1 bekannt. Hierbei wird der Teppich zweistufig nass aufgemahlen und in zwei hintereinander geschalteten Zentrifugen-Trennstufen in drei Fraktionen aufgetrennt.

Der Erfindung liegt die Aufgabe zu Grunde, das bekannte Verfahren zu verbessern und auf kostengünstige Weise möglichst reines Polymerfasermaterial, z.B. Polyamidfasern, zu gewinnen. Erfindungsgemäß wird dies beim eingangs genannten Verfahren dadurch erreicht, dass man mit der wasserhaltigen Trennlösung eine Säure, die stärker als H₂ CO₃ ist, in den zweiten Rührbehälter gibt und den pH-Wert der Flüssigkeit im zweiten Rührbehälter auf 2 - 6 einstellt. Durch das Ansäuern im zweiten Rührbehälter werden Reste von Kreide gelöst und können vollständig abgetrennt werden. Kreidehaltige Partikel, insbesondere Kautschukpartikel, verringern durch das Ablösen der Kreide ihr spezifisches Gewicht und können mit der dritten feststoffreichen Phase durch die mechanische Trennstufe abgeführt werden. Als Säure, die stärker als H₂ CO₃ ist, kommen z.B. Salpetersäure, Salzsäure, Essigsäure oder Ameisensäure in Frage.

Vorteilhafterweise ist das dem ersten Rührbehälter zugeführte Trennsalz ein in Wasser gut lösliches Calciumsalz, dessen Säure Calciumcarbonat löst. Geeignete Calciumsalze sind z.B. Calciumnitrat und Calciumchlorid. Es ist aber alternativ auch möglich, ein gut lösliches Salz wie z.B. K₂ CO₃ zu verwenden.

Eine oder beide Trennstufen arbeiten vorzugsweise mit einer Doppelkonus-Vollmantel-Zentrifuge. Vor jeder Zentrifuge wird im zugehörigen Rührbehälter eine Suspension erzeugt, deren Feststoffkonzentration im Bereich von 1 - 15 Gew.-% und vorzugsweise 3 - 10 Gew.-% liegt. Man sorgt dafür, dass die Dichte der flüssigen Phase der Suspension in der ersten Trennstufe auf einem Wert eingestellt ist, der zwischen der höchsten und zweithöchsten Dichte der Teppich-Hauptkomponenten liegt. In der zweiten Trennstufe liegt die Dichte der flüssigen Phase zwischen der niedrigsten und der zweitniedrigsten Dichte der Teppich-Hauptkomponenten. Die spezifisch schwerste Teppich-Komponente ist normalerweise, durch den Füllstoff bedingt, das Teppichrückenmaterial mit einer Dichte von etwa 1,5 - 3,5 kg pro Liter. Die zweitschwerste Komponente bilden die Polfasern, mit einer Dichte von etwa 1,35 kg pro Liter für Polyester und etwa 1,15 kg pro Liter für Polyamid. Entsprechend wird z.B. die Dichte der flüssigen Phase der Suspension der ersten Trennstufe beim Gewinnen von Polyester-Fasern auf einen Wert im Bereich von etwa 1,36 bis etwa 1,5 kg pro Liter und bei Polyamiden im Bereich von 1,16 bis 1,3 kg pro Liter eingestellt (bei 20 °C). Für die Einstellung der Dichte der ersten Suspension spielt das dabei verwendete Trennsalz eine wichtige Rolle. Im zweiten Rührbehälter ist neben der Dichte auch die Einstellung des pH-Werts im Bereich von 2 - 6 durch Säure-Zugabe von Bedeutung. Der Zusatz geringer Mengen von weniger als 0,2 g pro Liter eines handelsüblichen Benetzungsmittels und/oder Entschäumers in den ersten und/oder zweiten Rührbehälter ist zu empfehlen.

Mit der Doppelkonus-Vollmantel-Schneckenzentrifuge werden besonders gute Trennergebnisse erreicht. Mit dieser handelsüblichen Apparatur ist es möglich, den Anteil des Feststoffs mit höherer Dichte als die Flüssigphase vom Anteil mit einer geringeren Dichte als die Flüssigphase zu trennen und als dritte Phase eine Flüssigphase zu erhalten. Die beiden Feststoff-Phasen werden je nach Konsistenz der Partikel mit einer Restfeuchte im Bereich von 2 bis 25 Gew.-% ausgetragen. Die in der ersten Trennstufe gewonnene schwerste Feststoff-Fraktion besteht üblicherweise vor allem aus mineralischen Füllstoffen, z.B. mit Kreide versetztem Synthese-Kautschuk und enthält nur geringe Mengen an Fasermaterial. Nach einer Trocknung kann diese Fraktion einer thermischen oder stofflichen Verwertung zugeführt werden.

Eine Weiterbildung der Erfindung besteht darin, dass das Polymerfasermaterial der zerkleinerten Teppichbodenstücke mindestens teilweise aus Polyamidfasermaterial besteht und dass die zweite feststoffreiche Phase, trocken gerechnet, zu mindestens 50 Gew.-% aus Polyamidfasermaterial besteht. Vorzugsweise zieht man aus der zweiten Trennstufe eine an Polymerfasermaterial reiche Phase ab, die zu mindestens 90 Gew.-% aus Polyamidfasermaterial besteht. Die Wiederverwendung dieses Polyamidfasermaterials ist nun ohne Schwierigkeiten möglich, da es die erforderliche Reinheit besitzt, um es z.B. in Recycling-Verfahren als Rohstoff einzusetzen.

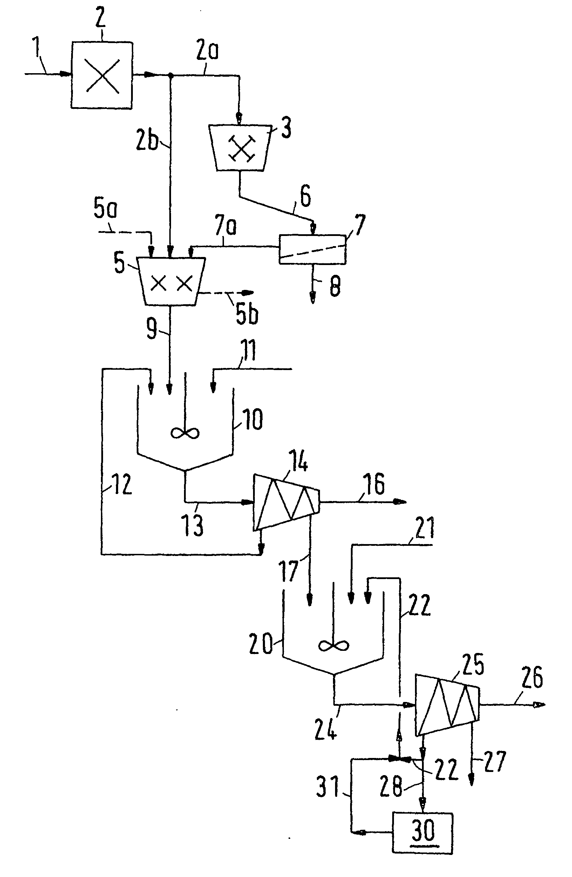

Ausgestaltungsmöglichkeiten des Verfahrens werden mit Hilfe der Zeichnung erläutert, sie zeigt ein Fliesschema des Verfahrens.

Die zu verarbeitenden Teppichabfälle werden auf dem Transportweg (1.) zunächst einer Vorzerkleinerung (2), z.B. einem Schredder zugeführt. Das vorzerkleinerte Material gelangt dann entweder auf dem Transportweg (2a) zu einer Hammermühle (3) oder auf dem Transportweg (2b) direkt zur Feinzerkleinerung in eine Schneidmühle (5). Das die Hammermühle (3) durchlaufende, üblicherweise stärker verschmutzte Teppichmaterial, wird durch die Leitung (6) einem Sieb (7) zugeführt, welches Maschenweiten etwa im Bereich von 3 - 10 mm aufweist. Der dem Teppichboden anhaftende Schmutz wird zusammen mit einem Anteil Kreide abgetrennt und durch die Leitung (8) entfernt, die Teppichbodenstücke gelangen auf dem Weg (7a) zur Schneidmühle (5). Der Weg über die Hammermühle (3) und das Sieb (7) hat den Vorteil, dass verschleißfördernder Schmutz, z.B. Sand, vor Eintrag in die Feinzerkleinerung entfernt wird. Ferner wird der aus dem Schredder (2) kommende Stoffstrom verringert. Dadurch können nachfolgende Anlagenteile kleiner gebaut werden, auch werden nachfolgende Verluste an Salz und Wasser, die über die Restfeuchte der Feststoffe auftreten, verringert.

Der Austrag aus der Schneidmühle erfolgt über ein Lochblech mit Bohrungen im Bereich von etwa 3 - 10 mm und vorzugsweise 4 - 8 mm. Durch die Zerkleinerung findet eine weitgehend vollständige Auftrennung des Teppichbodenverbundes statt. Die Zerkleinerung kann, abhängig vom Grad der Verschmutzung des Rohstoffs, entweder trocken oder nass erfolgen. Im letzteren Fall führt man Wasser durch die Leitung (5a) zu und führt Schmutzwasser durch die Leitung (5b) ab.

Zerkleinertes Teppichbodenmaterial mit Stückgrößen etwa im Bereich von 3 - 20 mm wird durch die Leitung (9) einem ersten Rührbehälter (10) zugeführt, dem man auch durch die Leitung (11) eine Trennsalz enthaltende erste wässrige Lösung aufgibt. Eine zurückgeführte erste Flüssigphase wird durch die Leitung (12) ebenfalls in den Behälter (10) geführt. Man erzeugt eine erste Suspension, welche man durch die Leitung (13) einer ersten Trennstufe (14) zuführt. Die erste Suspension hat einen Feststoff-Gehalt von üblicherweise 1 - 15 Gew.-%, die Dichte der Flüssigphase liegt beim Gewinnen von Polyamid-Fasermaterial üblicherweise im Bereich von 1,16 - 1,2 kg pro Liter.

Aus der ersten Trennstufe (14) zieht man durch die Leitung (16) eine erste feststoffreiche Phase ab, bei der es sich um die schwere Phase handelt, welche Kautschuk und Kreide enthält. Die zweite feststoffreiche Phase, die das zu gewinnende Polymerfasermaterial enthält, zieht man in der Leitung (17) ab und gibt sie einem zweiten Rührbehälter (20) auf. Die in der ersten Trennstufe ebenfalls anfallende Flüssigphase wird in der Leitung (12) zurückgeführt.

Durch die Leitung (2 1 ) führt man dem zweiten Behälter (20) eine wässrige, Säure enthaltende Trennlösung zu und gibt dem Behälter (20) auch eine rückgeführte Flüssigphase auf, die aus der Leitung (22) kommt. Die Säure ist stärker als H₂ CO₃, damit sie insbesondere Kreide gut löst. Im Behälter (20) erzeugt man eine Suspension, deren Flüssigkeit einen pH-Wert von 2 - 6 hat, so dass sich unter anderem sämtliche Calciumverbindungen lösen. Die erzeugte Suspension gelangt durch die Leitung (24) mit einem Feststoff-Gehalt von 1 - 15 Gew.-% in die zweite Trennstufe (25), die ebenso wie die erste Trennstufe (14) eine Doppelkonus-Vollmantel-Zentrifuge sein kann. Die Dichte der Flüssigkeit in der Suspension der Leitung (24) beträgt beim Gewinnen von Polyamid-Fasermaterial üblicherweise 1,0 - 1,12 kg pro Liter. Aus der zweiten Trennstufe zieht man durch die Leitung (26) die schwerere feststoffreiche Phase ab, die üblicherweise aus Polfasern besteht. Dieses Material kann man einer Depolymerisationsanlage zuführen. In der Leitung (27) fällt die gewünschte, an Polymerfasermaterial reiche Phase an, die z.B. zu mindestens 90 Gew.-% aus Polyamidfasern bestehen kann. Die ebenfalls abgetrennte Flüssigphase wird teilweise in der Leitung (22) zurückgeführt, ein gewisser Anteil davon kann durch die Leitung (28) aus dem Verfahren entfernt und einer Reinigung (30), z.B. einem Eindicker, zugeführt werden. Gereinigte wässrige Trennlösung wird in der Leitung (31) zurückgeführt. Dem Eindicker (30) kann man auch das in der Leitung (5b) anfallende Schmutzwasser aufgeben.

### Beispiel 1:

Man arbeitet mit einer der Zeichnung entsprechenden Anlage, welcher man durch den Transportweg (1) 50 kg Teppichboden folgender Zusammensetzung zuführt:

| | |
|---|---|
| Flormaterial aus Polyamidfasern (PA) | 35 Gew.-% |
| Polypropylen als Trägergewebe (PP) | 7 Gew.-% |
| Schaumrücken aus kreidehaltigem Styrol-Butadien-Latex (SBR) | 55 Gew.-% |
| Schmutz | 3 Gew.-% |

Der Teppichboden wird in einem Schredder (2), ausgestattet mit einem Sieb von 90 mm, vorzerkleinert. Anschließend wird mittels einer Hammermühle (3) der den Stücken anhaftende Schmutz und sonstige Feinanteil mechanisch gelockert. Der Teppichboden wird über den Transportweg (6) der Siebmaschine (7) zugeführt. Diese Trenneinrichtung ist mit einem Sieb der Machenweite 5 mm ausgestattet. Aus dem Unterlauf werden 2,6 kg Schmutz und sonstiger Feinanteil abgeschieden.

Der geschredderte Teppichboden aus dem Oberlauf der Siebmaschine wird der Schneidemühle (5) zugeführt, die mit einem Lochblech mit einem Bohrungsdurchmesser von 6 mm Quadratloch ausgestattet ist. In dieser Einrichtung wird der Teppichboden trocken feinzerkleinert. Der gemahlene Teppichboden wird über die Leitung (9) dem Rührbehälter (10) zugeführt. In dem Behälter befinden sich 900 kg einer mittels Ca (NO₃)₂ auf die Dichte 1,17 kg/l eingestellte Trennlösung, die teilweise über Leitung (12) vorgelegt wurde. Zur Einstellung der Dichte enthält die Lösung 194 kg Ca (NO₃)₂. Die hergestellte Suspension wird über Leitung (13) einer Doppelkonus-Vollmantel-Schneckenzentrifuge (14) zugeführt.

Die erste feststoffreiche Phase (Trockengewicht: 26,2 kg) wird mit einer Restfeuchte von 22 Gew.-% durch die Leitung (16) und die zweite feststoffreiche Phase (Trockengewicht: 21,1 kg) wird mit einer Restfeuchte von 12 Gew.-% durch die Leitung (17) ausgetragen, die Trennlösung (12) wird in den Rührbehälter (10) zurückgeführt. Die zweite feststoffreiche Phase wird in dem zweiten Rührbehälter (20) eingetragen und in 399 kg Wasser suspendiert. In die im Rührbehälter (20) angesetzte Suspension wird 2,4 kg Salpetersäure (21) mit einer Konzentration von 50 % zugegeben, so dass der pH-Wert bei 4 liegt.

Die hergestellte Suspension wird über Leitung (24) in die zweite Trennstufe (25) eingetragen. Die dritte feststoffreiche Phase (trocken 4,7 kg) wird mit einer Restfeuchte von 14 Gew.-% durch die Leitung (27) und die vierte feststoffreiche Phase (trocken 16,4) wird mit einer Restfeuchte von 16 Gew.-% durch die Leitung (26) ausgetragen. Die Trennlösung (22) wird teilweise in den Rührbehälter (20) zurückgeführt, ein Teilstrom (28) von 40 kg wird ausgeschleust und dem Eindicker (30) zugeführt. Nach Klärung und Abzug von 0,1 kg Verunreinigungen erfolgt der erneute Eintrag in den Trennkreislauf der 2. Stufe (Leitung (31)).

Die einzelnen feststoffreichen Phasen haben, bezogen auf die Trockensubstanz, folgende Zusammensetzung:

| | PA | PP | SBR | Schmutz |
|---|---|---|---|---|
| Erste feststoffreiche Phase | 3,4 Gew.-% | 0,1 Gew.-% | 94,8 Gew.-% | 1,7 Gew.-% |
| Zweite feststoffreiche Phase | 77,8 Gew.-% | 16,2 Gew.-% | 5,9 Gew.-% | 0,1 Gew.-% |
| Dritte feststoffreiche Phase | 8,7 Gew.-% | 90,3 Gew.-% | 1,0 Gew.-% | 0,0 Gew.-% |
| Vierte feststoffreiche Phase | 98,2 Gew.-% | 0,2 Gew.-% | 1,5 Gew.-% | 0,1 Gew.-% |
| Siebrückstand | 6,6 Gew.-% | 1,3 Gew.-% | 52,2 Gew.-% | 39,8 Gew.-% |

### Beispiel 2:

Man arbeitet ebenfalls mit einer der Zeichnung entsprechenden Anlage, welcher man durch den Transportweg (1) 50 kg Teppichboden folgender Zusammensetzung zuführt:

| | |
|---|---|
| Flormaterial aus Polyamidfasern (PA) | 35 Gew.-% |
| Polypropylen als Trägergewebe (PP) | 7 Gew.-% |
| Schaumrücken aus kreidehaltigem Styrol-Butadien-Latex (SBR) | 57 Gew.-% |
| Schmutz | 1 Gew.-% |

Der Teppichboden wird in einem Schredder (2), wie im Beispiel 1 vorzerkleinert. Anschließend wird der geschredderte Teppichboden über Leitung (2b) der Schneidemühle (5) zugeführt. Die Schneidemühle ist mit einem Lochblech mit einem Bohrungsdurchmesser von 6 mm Quadratloch ausgestattet. In dieser Einrichtung wird der Teppichboden unter Zusatz von 200 kg Wasser feinzerkleinert. Aus der Mühle werden 150 kg Wasser und 1,0 kg Schmutz ausgetragen und über Leitung (5b) dem Eindicker (30) zugeführt. 50 kg im Rohstoff verbleibendes Wasser werden dem Rührbehälter (10) zusammen mit dem gemahlenen Teppichboden über die Leitung (9) zugeführt. In dem Behälter ist eine mittels Ca (NO₃)₂ hergestellte Trennlösung über die Leitung (12) vorgelegt, die sich mit den aus der Mühle eingetragenen 50 kg Wasser auf die Dichte 1,17 kg/l einstellt und eine Gesamtmenge von 931 kg Trennlösung ergibt. Zur Einstellung der Dichte enthält die Lösung 201 kg Ca (NO₃)₂. Die hergestellte Suspension wird über Leitung (13) einer Doppelkonus-Vollmantel-Schneckenzentrifuge (14) zugeführt. Die erste feststoffreiche Phase (Trockengewicht: 27,8 kg) wird mit einer Restfeuchte von 22 Gew.-% durch die Leitung (16) abgezogen, die zweite feststoffreiche Phase (Trockengewicht: 21,2 kg) wird mit einer Restfeuchte von 12 Gew.-% durch die Leitung (17) in den zweiten Rührbehälter (20) gegeben und dort in 400 kg Wasser suspendiert. Die Trennlösung der Leitung (12) wird in den Rührbehälter (10) zurückgeführt.

In die im Rührbehälter (20) angesetzte Suspension wird 2,6 kg Salpetersäure mit einer Konzentration von 50 % zugegeben und der pH-Wert auf 3,5 eingestellt. Die hergestellte Suspension wird über Leitung (24) in die zweite Trennstufe (25) eingetragen. Die dritte feststoffreiche Phase (trocken 4,8 kg) wird mit einer Restfeuchte von 14 Gew.-% in die Leitung (27) abgeführt und die vierte feststoffreiche Phase (trocken 16,4) wird mit einer Restfeuchte von 16 Gew.-% in der Leitung (26) abgezogen.

Die Trennlösung (22) wird in den Rührbehälter (20) zurückgeführt. Ein Teilstrom (28) von 40 kg wird ausgeschleust und dem Eindicker (30) zugeführt. Nach Klärung und Abzug von 1,1 kg Verunreinigungen erfolgt der erneute Eintrag in den Trennkreislauf der 2. Stufe durch die Leitung (31). Hinzu kommen noch 150 kg Wasser, die durch die Leitung (5b) dem Eindicker aufgegeben wurden.

Die einzelnen feststoffreichen Phasen haben, bezogen auf die Trockensubstanz, folgende Zusammensetzung:

| | PA | PP | SBR | Schmutz |
|---|---|---|---|---|
| | | | | |
| Erste feststoffreiche Phase | 3.2 Gew.-% | 0.1 Gew.-% | 95,9 Gew.-% | 0,7 Gew.-% |
| Zweite feststoffreiche Phase | 77,5 Gew.-% | 16,2 Gew.-% | 6,3 Gew.-% | 0,0 Gew.-% |
| Dritte feststoffreiche Phase | 8,7 Gew.-% | 90,2 Gew.-% | 1,1 Gew.-% | 0,0 Gew.-% |
| Vierte feststoffreiche Phase | 98,2 Gew.-% | 0,2 Gew.-% | 1,6 Gew.-% | 0,0 Gew.-% |

## Patentansprüche

1. Verfahren zum Abtrennen von Polymerfasermaterial aus zerkleinerten Teppichbodenstücken, welche man zusammen mit einer Trennsalz enthaltenden wässrigen Lösung einem ersten Rührbehälter zuführt und aus dem ersten Rührbehälter eine erste Suspension abzieht, welche man einer ersten mechanischen Trennstufe zuführt, aus welcher man eine erste feststoffreiche Phase, eine zweite feststoffreiche Phase, die Polymerfasermaterial enthält, und eine Flüssigphase abtrennt, wobei man die zweite feststoffreiche Phase mit einer wasserhaltigen Trennlösung in einem zweiten Rührbehälter mischt und aus dem zweiten Rührbehälter eine zweite Suspension abzieht, welche man einer zweiten mechanischen Trennstufe zuführt, aus welcher man eine dritte feststoffreiche Phase, eine an Polymerfasermaterial reiche Phase und eine Flüssigphase abtrennt, **dadurch gekennzeichnet, dass** man mit der wasserhaltigen Trennlösung eine Säure, die stärker als H₂ CO₃ ist, in den zweiten Rührbehälter gibt und den pH-Wert der Flüssigkeit im zweiten Rührbehälter auf 2 - 6 einstellt.

2. Verfahren nach Anspruch 1, **dadurch gekennzeichnet, dass** das dem ersten Rührbehälter zugeführte Trennsalz ein Calciumsalz ist, dessen Säure Calciumcarbonat verdrängt.

3. Verfahren nach Anspruch 1 oder 2, **dadurch gekennzeichnet, dass** das Polymerfasermaterial der zerkleinerten Teppichbodenstücke mindestens teilweise aus Polyamidfasermaterial besteht, dass die zweite feststoffreiche Phase, trocken gerechnet, zu mindestens 50 Gew.-% aus Polyamidfasermaterial besteht und dass die an Polymerfasermaterial reiche Phase, die aus der zweiten mechanischen Trennstufe kommt, zu mindestens 90 Gew.-% aus Polyamidfasermaterial besteht.

4. Verfahren nach Anspruch 1 oder einem der folgenden, **dadurch gekennzeichnet, dass** die zu verarbeitenden Teppichbodenstücke aus einer Trockenzerkleinerung oder Nasszerkleinerung kommen.

## Claims

1. Process for separating polymer fibre material from shredded carpeting pieces which are passed, together with an aqueous solution containing separating salt, to a first agitated vessel and a first suspension being withdrawn from the first agitated vessel which suspension is passed to a first mechanical separation stage from which a first phase rich in solids, a second phase rich in solids containing polymer fibre material and a liquid phase are separated off, the second phase rich in solids being mixed with a water-containing separating solution in a second agitated vessel and a second suspension being withdrawn from the second agitated vessel which suspension is passed to a second mechanical separation stage from which a third phase rich in solids, a phase rich in polymer fibre material and a liquid phase are separated off, **characterised in that** an acid which is stronger than H₂CO₃ is introduced together with the water-containing separating solution into the second agitated vessel and the pH of the liquid in the second agitated vessel is adjusted to 2 - 6.

2. Process according to claim 1, **characterised in that** the separating salt passed to the first agitated vessel is a calcium salt the acid of which displaces calcium carbonate.

3. Process according to claim 1 or 2 **characterised in that** the polymer fibre material of the shredded carpeting pieces consists at least partly of polyamide fibre material, that the second phase rich in solids consists to an amount of at least 50 % by wt, calculated on a dry basis, of polyamide fibre material and that the phase rich in polymer fibre material which arrives from the second mechanical separation state consists to an amount of at least 90 % by wt. polyamide fibre material.

4. Process according to claim 1 or one of the following **characterised in that** the carpeting pieces to be processed arrives form dry shredding or wet shredding.

## Revendications

1. Procédé pour la séparation de matériau de fibres polymérisées à partir de fragments broyés de tapis de sol, que l'on amène conjointement avec une solution aqueuse contenant un sel de séparation, dans une première cuve sous agitation dont on soutire une première suspension que l'on amène à une première étape de séparation mécanique, dans laquelle on sépare une première phase riche en matières solides, une seconde phase riche en matières solides qui contient le matériau de fibres polymérisées, ainsi qu'une phase liquide, du type selon lequel on mélange la seconde phase riche en matières solides avec une solution de séparation contenant de l'eau dans une seconde cuve sous agitation à partir de laquelle on soutire une seconde suspension, que l'on amène à une seconde étape de séparation mécanique, dans laquelle on sépare une troisième phase riche en matières solides, une phase riche en matériau de fibres polymérisées ainsi qu'une phase liquide, ledit procédé étant **caractérisé en ce que** l'on introduit dans la seconde cuve sous agitation et conjointement avec la solution de séparation contenant de l'eau, un acide qui est plus fort que H₂CO₃ et **en ce que** l'on ajuste le pH du liquide dans la seconde cuve sous agitation à une valeur allant de 2 à 6.

2. Procédé selon la revendication 1, **caractérisé en ce que** le sel de séparation alimenté dans la première cuve sous agitation est un sel de calcium, dont l'acide déplace le carbonate de calcium.

3. Procédé selon la revendication 1 ou 2, **caractérisé en ce que** le matériau de fibres polymérisées des fragments broyés de tapis de sol se compose au moins partiellement de matériau de fibres polyamide, **en ce que** la seconde phase riche en matières solides se compose d'au moins 50 % en poids, calculés à partir de l'extrait sec, de matériau de fibres polyamide et **en ce que** la phase riche en matériau de fibres polymérisées, qui provient de la seconde étape de séparation mécanique, se compose d'au moins 90 % en poids de matériau de fibres polyamide.

4. Procédé selon l'une des revendications précédentes, **caractérisé en ce que** les fragments de tapis de sol à traiter proviennent d'un broyage à sec ou d'un broyage à l'état humide.
